Europäisches Patentamt

European Patent Office

Office européen des brevets

(11) Publication number: **0 149 495 B1**

## EUROPEAN PATENT SPECIFICATION

(45) Date of publication of patent specification: **15.04.92**    (51) Int. Cl.5: **H04B 10/24**, H04L 12/42,
    H04B 3/54

(21) Application number: **85100464.8**

(22) Date of filing: **17.01.85**

(54) **Signal transmission system.**

(30) Priority: **19.01.84 JP 8224/84**
    **05.03.84 JP 42780/84**

(43) Date of publication of application:
    **24.07.85 Bulletin 85/30**

(45) Publication of the grant of the patent:
    **15.04.92 Bulletin 92/16**

(84) Designated Contracting States:
    **DE FR GB IT NL SE**

(56) References cited:
    **EP-A- 0 070 733**
    **GB-A- 1 581 803**
    **GB-A- 2 073 407**

    **8th ECOC, PROCEEDINGS OF THE EUROPE-
    AN CONFERENCE ON OPTICAL COMMUNI-
    CATION, Cannes, 21st-24th September 1982,
    pages 371-376, SEE, Paris, FR; U. YOSHIHIRO
    et al.: "Local network modules with no re-
    striction on number of bypassed terminals"**

(73) Proprietor: **SUMITOMO ELECTRIC INDUSTRIES
    LIMITED
    No. 15, Kitahama 5-chome, Higashi-ku
    Osaka-shi, Osaka 541(JP)**

(72) Inventor: **Ihara, Susumu c/o Osaka Works of
    Sumitomo Electr.Ind. Ltd. 1-3, Shimaya
    1-chome
    Konohana-ku Osaka-shi Osaka(JP)**
    Inventor: **Kurebayashi, Koichi c/o Osaka
    Works of
    Sumitomo Electr. Ind. Ltd. 1-3, Shimaya
    1-chome
    Konohana-ku Osaka-shi Osaka(JP)**

(74) Representative: **Lehn, Werner, Dipl.-Ing. et al
    Hoffmann, Eitle & Partner Patentanwälte Ar-
    abellastrasse 4
    W-8000 München 81(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

The present invention relates to a signal transmission system, and more particularly to a system using optical fiber transmission paths communicated between a central station such as a power station and a plurality of local transmission stations provided on such as steel towers of an electric power transmission system.

In an optical communication system using overhead ground wires including optical fibers (referred to as OPGW hereinafter) suspended on a plurality of steel towers of a power transmission system, each of the steel towers is provided with a local data transmission device which serves to collect various data and transmit the data towards the central station with the OPGWs formed as data transmission paths for communicating among the local data transmission devices and the central station.

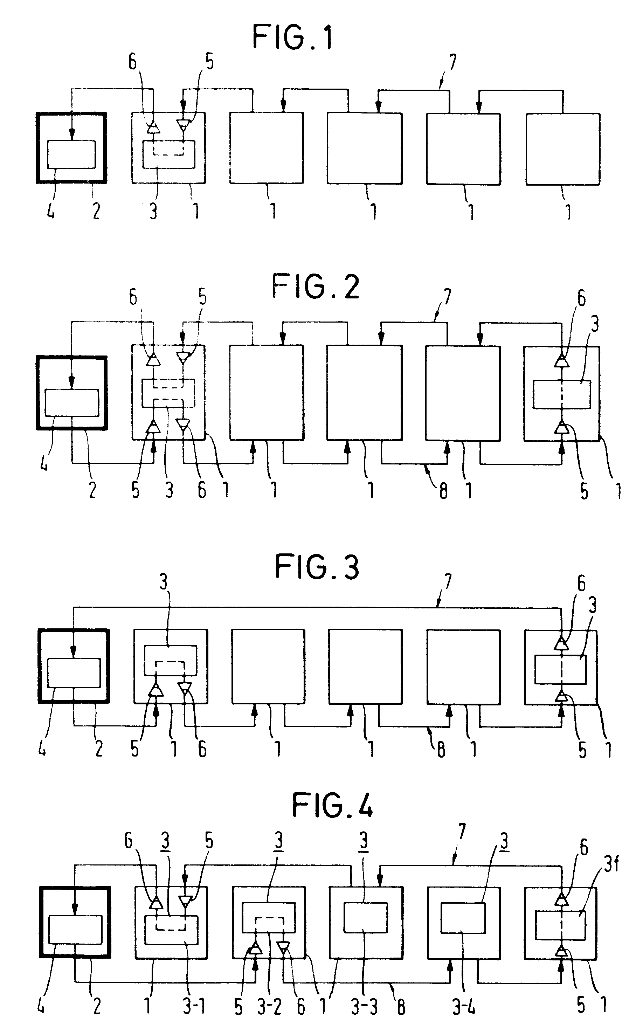

Fig. 1 shows one example of such a transmission system as described above in which the reference numerals 1 denote the power transmission steel towers and 2 denotes a power station acting as a central station so far as concerns the data communication system. Each of the steel towers 1 is provided with a local data transmission device 3 and the power station 2 is provided with a central data processing unit 4. The local data transmission devices 3 are connected serially together through data paths 7 using OPGW and optical-electric converters 5 and electric-optical converters 6, each provided at the input terminal and the output terminal of the local device 3. However, the system of Fig. 1 has such a drawback that the data transmission is possible only in one direction from the local data transmission device 3 to the central data processing unit 4.

Another example of the data transmission system using OPGW shown in Fig. 2 is made to eliminate the drawback as described above, wherein in addition to the first transmission paths 7 similar to those in Fig. 1, there are provided second transmission paths 8 of OPGW for communicating from the central unit 4 to the local devices 3. In this system, bidirectional communication is possible, however, there must be provided twice the number of the converters 5 and 6 compared to the system of Fig. 1.

In a further example of the data transmission system using OPGW shown in Fig. 3, the first data transmission path 7 is employed for communication from the furthest local device to the central unit 4 with the second data transmission paths 8 formed in a similar manner as in the system of Fig. 2. In the system of Fig. 3, although the number of the converters 5 and 6 can be decreased compared to that of the system in Fig. 2, the length of the first data transmission path is large, thereby increasing the transmission loss in the first data transmission path.

EP-A-0 070 733 describes an overhead electric transmission system in which an overhead conductor includes at least one optical fiber constituting part of an optical communication system, there is provided, at a tower along the system, an electrically conductive rod supported by and electrically insulated by an insulator from the crossarm of the tower but electrically connected to earth through the primary winding of a step-down voltage transformer. The rod is substantially horizontal and substantially parallel to a group of overhead electric conductors suspended from the crossarm by an insulator.

GB-A-2 073 407 describes a data communications system including a plurality of stations; a first fiber optic transmission circuit connecting the stations in a loop configuration and enabling optical data to be transmitted to the stations around the loop in a first direction; a second fiber optic transmission circuit connecting the stations in a loop configuration and enabling optical data to be transmitted to the stations around the loop in a second direction opposite to the first; and each of the stations comprising a first transmitter/receiver connected to the first transmission circuit and a second transmitter/receiver connected to the second transmission circuit.

Accordingly, an object of the present invention is to eliminate the drawbacks being inherent in the proposed system as described above and to provide a transmission system using OPGW which enables the bidirectional communication between the central unit and the local devices without increasing either the number of the converters and the transmission loss in the data transmission path.

The object of the present invention is solved by a signal transmission system for communication of at least one central station and a plurality of local stations provided in towers of power transmission lines, said system using optical fiber cable means included in overhead ground wire means suspended on the towers across the central station and the local stations characterized in that there is formed a closed loop of the transmission path formed by said optical fiber cable means for effecting signal transmission from the central station to the local stations and from the local stations to the central station, said closed loop of the transmission path either being formed in such a manner that first transmission paths for transmitting the signal towards the central station are serially coupled with every other local station of a first group and second transmission paths for transmitting the signal towards the local stations from the central station are serially connected with every other local station of a second group of the remainder of the local stations and the first transmission paths and the second transmission paths are coupled through the furthest local station, or said closed loop of the transmission path being formed by a first transmission path for transmitting the signal from the central station to another central station in a PCM system and a second path for transmitting the signal from the another central station to the first-mentioned central station through the local stations.

For a better understanding of the invention and to show how the same may be carried into effect, reference will now be made, by way of example, to the accompanying drawings, in which:

Figs. 1 through 3 are schematic connecting diagrams showing examples of a transmission system using OPGW of the prior art;

Fig. 4 is a schematic connecting diagram showing one embodiment of the transmission system according to the present invention;

Fig. 5 is a block diagram of another embodiment of the transmission system according to the present invention; and

Fig. 6 is a schematic connecting diagram showing the detail of the transmission system shown in Fig. 5.

Referring to Fig. 4, the central data processing unit 4 is located in the power station 2 and each of the steel towers 1 is provided with the local data transmission device 3. There are provided the optical-electric converter 5 and the electric-optical converter 6 coupled at the input terminal and the output terminal respectively of each of the local data transmission devices 3.

The first transmission paths 7 using the optical fiber cable in the OPGW for transmitting the signal towards the central data processing unit 4 from the local data transmission devices 3 are serially coupled to every other local data transmission devices 3-1, 3-3,...3-2n-1 (wherein n = 1,2,3....). The second transmission paths 8 using the optical fiber cable in the OPGW for transmitting the data towards the local data transmission devices from the central data processing unit 4 are serially coupled to every other local data transmission devices 3-2, 3-4,...3-2n. The furthest end portions of the first and second transmission paths 7 and 8 are coupled through the furthest end local data transmission device 3f so that a closed loop path is formed through the first and second paths 7 and 8 when viewed from the central data processing unit 4.

In this arrangement, the signal from any one of the first group of the local devices (3-2n-1) coupled with the first transmission paths 7 can be transmitted to the central data processing unit 4 through the first transmission paths 7. The signal from any one of the second group of the local device 3-2n coupled with the second transmission paths 8 can be transmitted to the central data processing unit through the second transmission paths 8, the furthest local device 3f and the first transmission paths 7. The signal from the central data processing unit 4 can be transmitted to the local data transmission device 3 through the second transmission paths 8, the furthest local device 3f and the first transmission paths 7.

According to the signal transmission system as mentioned above, the data or signal can be transmitted in both directions between the central unit 4 and the local devices 3 and only two converters are necessary for each local data transmission device. Furthermore, since the signal can be transmitted through the OPGW path and every other local transmission devices with a suitable amplification, attenuation of the signal can be prevented in transmission in any directions.

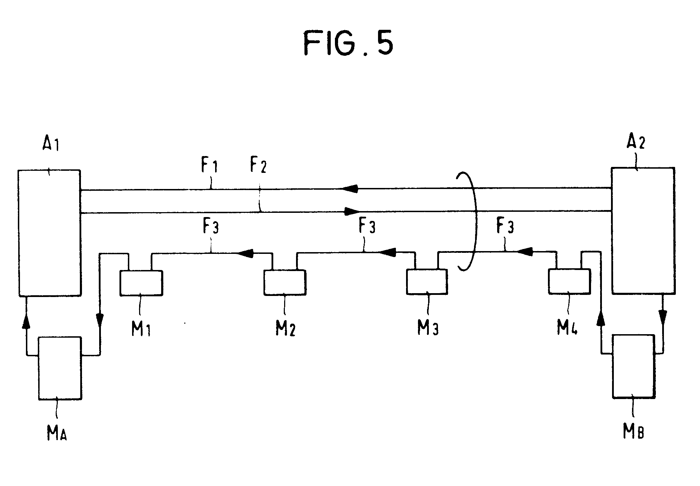

Fig. 5 shows another embodiment of the signal transmission system according to the present invention wherein master stations MA and MB of power stations A1 and A2 are coupled by optical fiber cables F1 and F2 in OPGW for transmission of the data or signal therebetween in a PCM (pulse coded modulation) system. Local stations of the respective steel towers M1 through M4 are connected by a series of optical fiber cables F3 for transmitting the data or signal from the local stations. By this arrangement, a closed loop is formed by the optical fiber cables F2 and F3 so that the data or signal can be transmitted in both directions between the master stations and the local stations.

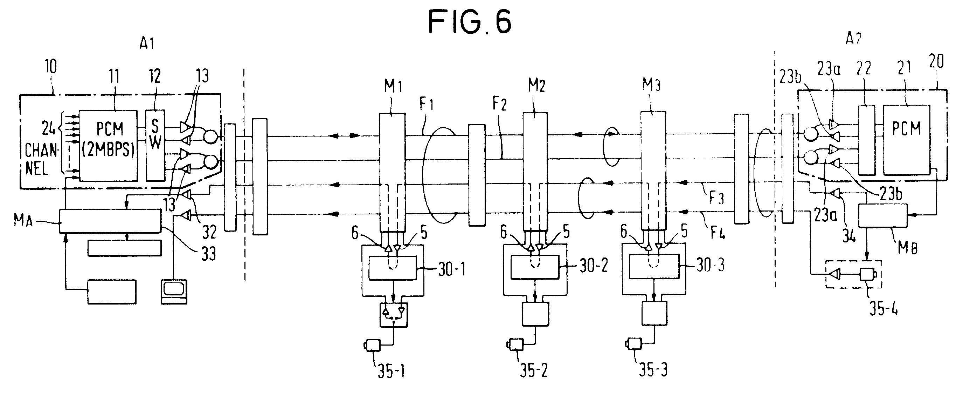

Fig. 6 shows a detailed arrangement of the system shown in Fig. 5. Referring to Fig. 6, a data transmission unit 10 is provided in a first power station A1. The unit 10 includes a PCM communication device 11 of 24 channels. The outputs of the PCM communication device 11 are coupled with two optical fiber cables F1 and F2 of four optical fiber cables F1 through F4 of non metallic type distributed with the overhead ground wire suspended on a plurality of steel towers M1, M2, M3... located between the master power stations A1 and A2. The transmission line F1 is for normal use and F2 is for emergency use. Each of the ends of the transmission lines is coupled with a PCM communication device 21 of a transmission unit 20 of the second power station A2 through optical-electric converters 23a, electric-optical converters 23b and channel selection switch 22. The transmission system using the optical fiber cables F1 and F2 is referred to as the first communication system, which serves to communicate between the power stations A1 and A2 by the PCM system.

The optical fiber cable F3 passes the local stations 30-1, 30-2 and 30-3 provided in the steel towers with the end of the optical fiber cable F3 coupled with a data processor 33 in the master station MA through an optical-electric converter 32. The another end of the optical fiber cable F3 is coupled with the master station MB through an electric-optical converter 34. By this arrangement, a closed loop passing the power station A1, the optical fiber cables F1 or F2, the power station A2, the optical fiber cables F3 and the respective local stations can be formed. Each of the local stations 30-1, 30-2 and 30-3 is provided with a transmitter and receiver for communication of the data in a time divisional manner. Each of the local station 30-1, 30-2 and 30-3 can transmit various measured data of the wind speed and wind direction or the like towards the master station MA of the power station A1 through the optical fiber cable F3. Also, these data can be transmitted to the master station MB from the master station MA through the first communication system. In addition, various instructions can be transmitted from the master station MA towards the respective local stations 30-1 and 30-2 through first communication system and the local station 30-3. By these instructions, local apparatus such as television cameras 35-1, 35-2 and 35-3 provided in the respective local stations 30-1,30-2 and 30-3 can be operated. Which television cameras is started can be designated by transmitting identification code for classifying the local station from the master station MA and judging the identification code in the respective local stations.

An optical fiber cable F4 serves to transmit the television signal from the respective television cameras 35-1 through 35-4 to the master station MA.

In the transmission system shown in Fig. 5, when the data or signal is transmitted to the master station MA from any one of the local stations 30-1 through 30-3 or the master station MB, the data or signal is transmitted through the optical fiber cable F3 leftward on the drawing, thereby inputted to the data processor 33 through the optical-electric converter 32.

On the other hand, when starting the television camera 35-2, the master station MA transmit the instructions to start the television with the identification code or address assigned for the local station 30-2 using the one channel of the first transmission system to the PCM communication device 21, subsequently the instructions and the identification code are transmitted to the respective local stations 30-3 through 30-1 through the master station MB, electric-optical converter 34 and the optical fiber cable F3. The local station 30-3 judges that the identification code thus transmitted is not for the station 30-3, thereby not operating the television camera 35-3. On the other hand, the local station 30-2 judges that the identification code is for that station 30-2, then starting the television camera 35-2.

By this arrangement, the closed loop of communication can be formed by only two optical fiber cables F2 and F3 enabling signal transmission in both directions using the first communication system, whereby the necessary number of optical cables can be decreased.

## Claims

1. Signal transmission system for communication of at least one central station (4) and a plurality of local stations (3) provided in towers (1) of power transmission lines, said system using optical fiber cable means (7,8) included in overhead ground wire means suspended on the towers (1) across the central station (4) and the local stations (3),
characterized in that
a closed loop of the transmission path is formed by said optical fiber cable means (7,8) for effecting signal transmission from the central station (4) to the local stations (3) and from the local stations (3) to the central station (4), said closed loop of the transmission path being formed in such a manner that first transmission paths (7) for transmitting the signal towards the central station (4) are serially coupled with every other local station of a first group and second transmission paths (8) for transmitting the signal towards the local stations (3) from the central station (4) are serially connected with every other local station of a second group of the remainder of the local stations and the first transmission paths (7) and the second transmission paths (8) are coupled through the furthest local station.

2. Signal transmission system for communication of at least one central station (4) and a plurality of local stations (3) provided in towers (1) of power transmission lines, said system using optical fiber cable means (7,8) included in overhead ground wire means suspended on the towers (1) across the central station (4) and the local stations (3),
characterized in that
a closed loop of the transmission path is formed by said optical fiber cable means (7,8) for effecting signal transmission from the central station (4) to the local stations (3) and from the local stations (3) to the central station (4), said closed loop of the transmission path being formed by a first transmission path (F1, F2) for transmitting the signal from the central station (A1) to another central station (A2) in a PCM system and a second path (F3) for transmitting the signal from the another central station (A2) to the first-mentioned central station (A1) through the local stations (M1-M4).

## Revendications

1. Ensemble de transmission de signaux destiné à permettre la communication entre au moins une station centrale (4) et plusieurs stations locales (3) placées dans des pylônes (1) des lignes de transmission d'énergie, l'ensemble utilisant des câbles à fibres optiques (7, 8) incorporés aux fils de masse suspendus dans les pylônes (1) entre la station centrale (4) et les stations locales (3),
   caractérisé en ce que
   une boucle fermée du trajet de transmission est réalisée par les câbles à fibres optiques (7, 8) pour la transmission de signaux de la station centrale (4) aux stations locales (3) et des stations locales (3) à la station centrale (4), la bouche fermée du trajet de transmission étant formée de manière que des premiers trajets (7) de transmission du signal vers la station centrale (4) soient couplés en série à une station locale sur deux dans le premier groupe, et des seconds trajets (8) de transmission du signal vers les stations locales (3) à partir de la station centrale (4) soient connectés en série avec une station locale sur deux d'un second groupe formé par le reste des stations locales, et les premiers trajets (7) et les seconds trajets (8) de transmission soient couplés par la station locale la plus éloignée.

2. Ensemble de transmission de signaux destiné à assurer la communication d'au moins une station centrale (4) avec plusieurs stations locales (3) placées dans des pylônes (1) de lignes de transmission d'énergie, l'ensemble utilisant des câbles à libres optiques (7, 8) incorporés à un fil de masse suspendu sur les pylônes (1) entre la station centrale (4) et les stations locales (3),
   caractérisé en ce que
   une bouche fermée du trajet de transmission est formée par les câbles à fibres optiques (7, 8) pour la transmission du signal de la station centrale (4) aux stations locales (3) et des stations locales (3) à la station centrale (4), la boucle fermée du trajet de transmission étant formée par un premier trajet (F1, F2) destiné à transmettre le signal de la station centrale (A1) à une autre station centrale (A2) dans un ensemble fonctionnant par modulation par impulsions et codage, et par un second trajet (F3) de transmission du signal de l'autre station centrale (A2) à la première station centrale (A1) par les stations locales (M1-M4).

## Patentansprüche

1. Signalübertragungssystem zur Verbindung mindestens einer Zentralstation (4) mit einer Vielzahl von Ortsstationen (3), die in Masten (1) von Energieübertragungsleitungen angebracht sind, wobei das System Lichtleitfaserkabel (7, 8) verwendet, die in Erdseile einbezogen sind, welche an den Masten (1) über der Zentralstation (4) und den Ortsstationen (3) aufgehängt sind,
   dadurch **gekennzeichnet,** daß mit dem Lichtleitfaserkabel (7, 8) eine geschlossene Schleife des Übertragungsweges zur Durchführung der Signalübertragung von der Zentralstation (4) zu den Ortsstationen (3), und von den Ortsstationen (3) zur Zentralstation (4) gebildet ist, wobei die geschlossene Schleife des Übertragungsweges so ausgebildet ist, daß erste Übertragungswege (7) zur Übermittlung des Signals an die Zentralstation (4) mit jeder anderen Ortsstation einer ersten Gruppe in Reihe geschaltet sind, und daß zweite Übertragungswege (8) zur Übermittlung des Signals von der Zentralstation (3) zu den Ortsstationen (3) mit jeder anderen Ortsstation einer zweiten Gruppe des Restes der Ortsstationen in Reihe geschaltet sind, und daß die ersten Übertragungswege (7) sowie die zweiten Übertragungswege (8) über die am weitesten entfernte Ortsstation miteinander verbunden sind.

2. Signalübertragungssystem zur Verbindung mindestens einer Zentralstation (4) und einer Vielzahl von Ortsstationen (3), die in Masten (1) von Energieübertragungsleitungen angebracht sind, wobei das System Lichtleitfaserkabel (7, 8) verwendet, die in Erdseile einbezogen sind, welche an den Masten (1) über der Zentralstation (4) und den Ortsstationen (3) aufgehängt sind,
   dadurch **gekennzeichnet**, daß mit dem Lichtleitfaserkabel (7, 8) eine geschlossene Schleife des Übertragungsweges zur Durchführung der Signalübertragung von der Zentralstation (4) zu den Ortsstationen (3), und von den Ortsstationen (3) zur Zentralstation (4) gebildet ist, wobei die geschlossene Schleife des Übertragungsweges aus einem ersten Übertragungsweg (F1, F2) zur Übermittlung des Signals von der Zentralstation (A1) zu einer anderen Zentralstation (A2) im PCM-System, und ein zweiter Übertragungsweg (F3) zur Übermittlung des Signals von der anderen Zentralstation (A2) an die erstgenannte Zentralstation (A1) über die Ortsstationen (M1-M4) ausgebildet ist.

FIG.1

FIG.2

FIG.3

FIG.4

# FIG.5

# FIG.6

EP 0 149 495 B1